# EUROPÄISCHE PATENTSCHRIFT

(11) **EP 0 444 144 B1**
(45) Veröffentlichungstag und Bekanntmachung des Hinweises auf die Patenterteilung: **26.05.1993**
(21) Anmeldenummer: 90900782.5
(22) Anmeldetag: 17.11.1989
(51) Int. Cl.: G05D 23/19, B01L 7/00

(54) **THERMOSTATISIERGERÄT**
THERMOSTATIC DEVICE
THERMOSTAT

(30) Priorität: 17.11.1988 DE 8814398 U
(43) Veröffentlichungstag der Anmeldung: 04.09.1991
(73) Patentinhaber: Max-Planck-Gesellschaft zur Förderung der Wissenschaften e.V., D-37073 Göttingen (DE)
(72) Erfinder: OTTEN, Hajo, D-7300 Esslingen (DE); EIGEN, Manfred, D-3400 Göttingen (DE); BAUER, Günter, D-3429 Krebeck (DE)
(74) Vertreter: Witte, Alexander, Dr.-Ing.
(86) Internationale Anmeldenummer: EP8901387
(87) Internationale Veröffentlichungsnummer: WO9005947

(56) Entgegenhaltungen:
- EP-A- 094 458
- EP-A- 151 781
- WO-A-87/02122
- DE-C- 815 706
- FR-A- 2 073 836
- US-A- 4 388 814
- US-A- 4 584 275

## Beschreibung

Die Erfindung betrifft ein Thermostatisiergerät zum Einstellen der Temperatur mindestens einer Probe auf beliebige Werte innerhalb eines vorgegebenen Temperaturbereiches, mit einem gut wärmeleitenden langgestreckten Grundkörper, der mit seinem ersten Ende an eine auf eine erste Temperatur eingestellte erste Thermostateinrichtung und mit seinem zweiten Ende an eine auf eine zweite Temperatur eingestellte zweite Thermostateinrichtung thermisch angeschlossen und so bemessen ist, daß zwischen diesen Ende ein Temperaturgradient längs des Grundkörpers entsteht, und mit einem wärmeleitenden Probenaufnahmekörper, der an einer beliebigen Stelle zwischen den thermostatisierten Enden mit dem Grundkörper zur thermischen Kopplung in Anlage bringbar ist.

Ein Thermostatisiergerät der vorstehend genannten Art ist aus der DE-OS-2 063 607 bekannt.

Viele chemische und biochemische Methoden erfordern es, Lösungen im Laufe eines Experiments auf verschiedene Temperaturen zu bringen. Die benötigten Temperaturen können dabei von unter 0°C bis über 110°C reichen und es werden je nach Experiment ganz verschiedene Temperaturen aus diesem Bereich verwendet. So erfordern enzymatische Reaktionen je nach Enzym Inkubationstemperaturen zwischen 30°C und 70°C. Zum Hitzedenaturieren von Nukleinsäuren werden je nach Kettenlänge und Sequenz Temperaturen bis zu 120°C eingesetzt. Zum Abstoppen von Reaktionen sind Temperaturen um 0°C erforderlich. Zur Lagerung von Proben werden Temperaturen erheblich unterhalb von 0°C verwendet. Die meisten Versuche verlangen darüber hinaus ein schnelles Umtemperieren der Lösungen. Ähnliche Aufgaben treten auch in anderen Gebieten der Wissenschaft und Technik auf.

Aus dem Laboralltag sind Flüssigkeitsthermostate und Metallblockthermostate bekannt, die auf verschiedene Temperaturen eingestellt werden können. Bei den Flüssigkeitsthermostaten werden die Reaktionsgefäße durch Umspülen mit Flüssigkeit thermostatisiert. Metallblockthermostate enthalten Bohrungen für die Reaktionsgefäße, die durch den Kontakt mit den Bohrungswänden thermostatisiert werden. Der Wärmeübergang kann durch Füllen der Bohrungen mit Wasser oder Öl verbessert werden. Das Temperieren von Metallblockthermostaten kann z. B. mit Hilfe von Heizpatronen erfolgen, die gegen eine ständig laufende Wasser- oder Konvektionskühlung geregelt werden. Auch Peltier-Elemente können zum Heizen und Kühlen von Metallblockthermostaten dienen.

Ein Wechsel der Temperatur der Proben erfolgt bei beiden obengenannten Thermostatentypen durch Aufheizen bzw. Abkühlen des ganzen Thermostaten.

Ein Vorteil der obengenannten Thermostaten besteht darin, daß für die verschiedenen Temperaturen nur ein Thermostat benötigt wird. Für viele Reaktionen ist das Umtemperieren wegen der erheblichen Wärmekapazität und Wärmeträgheit dieser Thermostaten jedoch zu langsam und zu zeitraubend.

Eine andere Möglichkeit, die Temperatur von Proben auf unterschiedliche Werte einzustellen, besteht darin, für jede Temperatur einen eigenen Flüssigkeitsbad-Thermostaten bereitzustellen. Für 0° kann dies z. B. ein Eisbad sein. Die Reaktionsgefäße werden dann jeweils in den Thermostaten mit der gerade gewünschten Temperatur eingeführt, zumeist geschieht dies per Hand. Es sind jedoch auch Apparaturen bekannt, bei denen die Proben mit einem Roboterarm manipuliert werden.

Ein Vorteil dieser Lösung ist, daß sich kürzere Umtemperierzeiten als bei den oben als erstes erwähnten Thermostatentypen erreichen lassen, da die Zeitkonstante für Temperaturänderungen bei gut gerührten Flüssigkeitsbadthermostaten durch den Wärmeübergang von der Flüssigkeit in die Probe bestimmt wird und nicht durch die Temperatur-Einstellzeit des betreffenden Thermostaten. Diese Lösung ist jedoch teuer und platzraubend, da für jede Temperatur ein eigener Thermostat benötigt wird.

In der eingangs genannten DE-OS-2 063 607 ist ein Rüttler zum gleichzeitigen Kultivieren von mehreren Kulturen von Mikroorganismen bei unterschiedlichen Temperatur bekannt. Bei dem bekannten Rüttler wird ein Aluminiumblock in schwingende Bewegung versetzt, der an seinem einen Ende geheizt und an seinem anderen Ende gekühlt wird, so daß sich längs des Aluminiumblockes ein Temperaturgefälle aufbaut. Der Aluminiumblock weist ferner parallel zu seiner Längsrichtung verlaufende Nuten sowie mehrere Bohrungen auf, die zur Aufnahme von Petri-Schalen aus Stahl oder von Glas-Kolben dienen, in denen sich die zu züchtenden Mikroorganismen befinden.

Der bekannte Rüttler ist dazu vorgesehen, gleichzeitig viele Kulturen bei unterschiedlichen Temperaturen zu inkubieren. Ein Umtemperieren der einzelnen Kulturen während der viele Stunden oder gar Tage dauernden Inkubationszeit ist weder vorgesehen noch erforderlich. Die Kulturen werden vielmehr - wie beim Züchten von Mikroorganismen erforderlich - während der gesamten Inkubationszeit auf konstanter Temperatur gehalten. Das breite Temperaturspektrum des Aluminiumblockes erlaubt es dabei, auf einem einzigen Rüttler und während einer einzigen Inkubationszeit die Wachstumsbedingungen von verschiedenen Kulturen bei unterschiedlichen Temperaturen zu untersuchen. Ein schnelles Umtemperieren von Proben, wie es die eingangs erwähnten chemischen und biochemischen Methoden erfordern, ist mit dem bekannten Rüttler nicht möglich.

Aus der EP-A-0 094 458 ist eine Vorrichtung bekannt, bei der in einem aus wärmeleitendem Material bestehenden länglichen Probenhalter ein Temperaturgefälle eingestellt und verändert werden kann. Der Probenhalter wird zu diesem Zweck mit Hilfe einer Transporteinrichtung in Richtung seiner Längsachse mehr oder weniger weit in die Heizzone eines Ofens eingeschoben, wobei zur Überwachung des sich aufbauenden Temperaturgefälles zwei in Längsrichtung des Probenhalters voneinander getrennt angeordnete Temperaturfühler vorgesehen sind. Der Temperaturfühler für den oberen Temperaturwert des Temperaturgradienten ist an dem in die Heizzone hineinragenden Ende des Probenhalters angeordnet und mit der Temperaturregelung der Ofenheizung verbunden, während der Temperaturfühler für den unteren Temperaturwert mit der Steuerung der Transporteinrichtung verbunden ist.

Durch die Wärmestrahlung des Ofens wird das in der Heizzone befindliche Ende des Probenhalters auf die jeweils eingestellte Ofentemperatur erhitzt, während sich das außerhalb des Ofens befindliche Ende durch Abgabe von Wärmestrahlung an die umgebende Luft gekühlt wird. Durch die relative Lage des Probenhalters zu der Heizzone wird die Länge des Temperaturgradienten in Längsrichtung des Probenhalters und der untere Temperaturwert eingestellt. Der Verlauf des Temperaturgradienten wird entweder über längs des Probenhalters verteilt angeordnete Temperaturfühler oder über einen längs des Probenhalters verfahrbaren Temperaturfühler gemessen. Zur Linearisierung des Verlaufes des Temperaturgradienten kann vor der Heizzone eine weitere Zwischenheizzone vorgesehen sein, deren Heizung mit Hilfe eines weiteren Temperaturfühlers geregelt wird, der zwischen den beiden anderen Temperaturfühlern an dem Probenhalter angeordnet ist.

Die Temperatur der fest an dem Probenhalter angeordneten Proben wird dadurch verändert, daß der Verlauf des Temperaturgradienten in dem Probenhalter verändert wird. Dies geschieht einerseits durch Verschieben des Probenhalters relativ zu der Heizzone und andererseits durch Einstellen der Ofenheizung auf unterschiedliche Temperaturwerte. Die Zeit, die die Änderung des Temperaturgradienten beansprucht, wird dadurch bestimmt, wie schnell der Probenhalter durch Strahlung aufgeheizt und/oder abgekühlt werden kann. In vertretbaren Zeiten läßt sich dies nur bei sehr weit oberhalb der Raumtemperatur gelegenen Temperaturen überhaupt erreichen. Da aber der Wärmeaustausch über Strahlung ein sehr langsamer Prozeß ist, dauert auch bei hohen Temperaturen der Aufbau eines neuen Temperaturgradienten sehr lange.

Weiterhin ist aus der EP-A-0 151 781 eine Vorrichtung zum Temperieren von Probenflüssigkeiten in einem automatisch arbeitenden Analysengerät bekannt. Die Vorrichtung umfaßt ein aus gut wärmeleitfähigem Material hergestelltes Rack, in das die die Probenflüssigkeit enthaltenden Probengefäße und/oder Küvetten eingesetzt werden. Das Rack wird in dem Analysengerät zwischen den einzelnen Bearbeitungs- und Meßstationen schrittweise hin- und herbewegt. Im Stillstand wird das Rack jeweils zwischen zwei Seitenwänden eingeklemmt, von denen mindestens eine beheizt ist, um das Rack und damit die Probenflüssigkeit in den Probengefäßen zu temperieren.

Die bekannte Vorrichtung ist für Analysen in klinischen Laboratorien vorgesehen und soll störende Temperaturänderungen während der Analysenabläufe verhindern. Insbesondere enzymkinetische Messungen, die stark temperaturabhängig sind, müssen bei genau bestimmten und reproduzierbaren Temperaturen durchgeführt werden, um vergleichbare Ergebnisse zu erzielen. Die Proben werden daher auf eine bestimmte Temperatur erwärmt, die für den weiteren Bearbeitungsablauf genau eingehalten wird.

Mit der bekannten Vorrichtung ist es lediglich möglich, die Proben auf eine einzige Temperatur zu erwärmen, eine Temperaturänderung während des Bearbeitungsablaufes kann nicht bewirkt werden. Ein schnelles Umtemperieren der Proben, wie es die eingangs genannten chemischen und biochemischen Methoden erfordern, ist mit der bekannten Vorrichtung nicht möglich.

Weiterhin ist aus der WO-A1-87/02122 eine Vorrichtung zum zeitlich gesteuerten allmählichen Abkühlen und Aufwärmen von biologischen Proben bekannt. Die Vorrichtung umfaßt einen thermisch isolierten Kasten mit Deckel und einen Korb zur Aufnahme der Proben, wobei der Korb mit Hilfe eines Zustellmechanismus in dem Kasten abgesenkt und angehoben werden kann. Auf dem Boden des Kastens befindet sich ein Vorrat an flüssigem Stickstoff, so daß sich von dem Boden ausgehend bis zum Deckel ein Temperaturgradient von - 192°C bis zur Raumtemperatur ausbildet. Durch Absenken des Korbes und Schließen des Deckels werden die auf dem Korb gelagerten Proben allmählich eingefroren, während sich der Temperaturgradient wegen des nun geschlossenen Deckels abbaut. Durch Öffnen des Deckels und Anheben des Korbes etabliert sich der Temperaturgradient wieder und die Proben werden allmählich aufgetaut.

Eine vergleichbare Vorrichtung zum gesteuerten und langsamen Einfrieren und Auftauen von biologischen Proben ist aus der US-PS-4 388 814 bekannt; sie unterscheidet sich von der vorstehend genannten Vorrichtung lediglich durch die Ausgestaltung eines Zustellmechanismus.

Zur Durchführung von chemischen und biochemischen Versuchen, insbesondere zum schnellen Umtemperieren von Proben sind diese Vorrichtungen ebenfalls nicht geeignet.

In der US-PS-4 584 275 ist ein Inkubator beschrieben, in dem gleichzeitig eine Anzahl von Flüssigkeitsproben inkubiert werden kann. Der Inkubator weist eine nach außen abgeschlossene Heizplatte auf, in der ein in sich geschlossener und rechtwinklig umlaufender Führungskanal für als Plättchen ausgebildeten Probenhalter vorgesehen ist. Die über einen Zufuhrkanal in den Führungskanal eingegebenen Probenhalter werden mit Hilfe von fünf Stößeln schrittweise im Kreis herumgeschoben, bis sie nach einer festgelegten Zeitdauer zu einer optischen Meßstation gelangen. Auf ihrem Weg zu der Meßstation sind die Proben während der festgelegten Zeitdauer kontinuierlich bei der Temperatur der Heizplatte inkubiert worden, so daß die Messung an allen Proben nacheinander unter reproduzierbaren Bedingungen durchgeführt werden kann. Nach der Messung werden die Plättchen aus dem Führungskanal ausgestoßen und mit neuen Proben beladen.

Auch dieser Inkubator ist nicht zum schnellen Umtemperieren von Lösungen geeignet, wie es bei chemischen und biochemischen Methoden häufig erforderlich ist.

Aus der DE-PS-815 706 ist zur thermischen Untersuchung von Substanzen eine Heizbank bekannt, die einen aus mehreren übereinanderliegenden Blechstreifen gefertigten Metallkörper aufweist. Der Metallkörper wird an seinem einen Ende auf 300°C oder mehr aufgeheizt, wobei sich zwischen dem heißen Ende und dem durch die Umgebungsluft gekühlten anderen Ende ein annähernd lineares Temperaturgefälle einstellt. Der Metallkörper ist mit einer Deckplatte aus verchromten Messing abgedeckt, auf die die zu untersuchenden Substanzen unmittelbar aufgelegt werden.

Mit Hilfe eines eichfähigen Maßstabes läßt sich die Temperatur an der jeweiligen Stelle der Heizbank bestimmen, so daß die Schmelzpunkte, eutektischen Temperaturen u.s.w. der zu untersuchenden Substanzen bestimmt werden können.

Wegen der Kühlung der Heizbank durch Wärmestrahlung liegt der zur Verfügung stehende Temperaturbereich deutlich über der Umgebungstemperatur. Chemische und biochemische Versuche können auch mit dieser Heizbank nicht durchgeführt werden.

Es ist daher Aufgabe der vorliegenden Erfindung, ein Thermostatisiergerät der eingangs genannten Art dahingehend weiterzubilden, daß die vorstehend genannten Nachteile vermieden werden. Insbesondere soll es mit dem neuen Thermostatisiergerät möglich werden, zur Durchführung von chemischen und biochemischen Methoden Lösungen im Laufe eines Experimentes auf verschiedene Temperaturen zu bringen, wobei das Umtemperieren schnell und einfach erfolgen soll.

Diese Aufgabe wird erfindungsgemäß dadurch gelöst, daß der Probenaufnahmekörper an dem Grundkörper in Längsrichtung verschiebbar gelagert ist, eine Transportvorrichtung zum Verschieben des Probenaufnahmekörpers vorgesehen ist, Mittel zum Andrücken des Probenaufnahmekörpers an den Grundkörper vorgesehen sind und zum schnellen Umtemperieren der Probe der Wärmestrom in dem Grundkörper sowie der Querschnitt des Grundkörpers so bemessen sind, daß die Wärmemenge, die dem Probenaufnahmekörper bei einer Temperaturänderung infolge Verschiebens des Probenaufnahmekörpers zu- oder abgeführt werden muß, in einer für chemische und biochemische Experimente geeigneten Zeitspanne von dem Grundkörper an den Probenaufnahmekörper abgegeben bzw. von diesem aufgenommen werden kann.

Die der Erfindung zugrundeliegende Aufgabe wird auf diese Weise gelöst. Bei dem Thermostatisiergerät gemäß der Erfindung ist es mit einem einzigen Gerät möglich, eine Probe auf jede beliebige Temperatur innerhalb eines vorgegebenen Temperaturbereiches zu bringen.

Da beim Ändern der Probentemperatur nur die Temperatur eines Probenaufnahmekörpers relativ kleiner Wärmekapazität und nicht die Temperatur eines ganzen Thermostaten geändert zu werden braucht, können Temperaturänderungen relativ schnell durchgeführt werden. Durch die Mittel zum Andrücken wird der Probenaufnahmekörper dabei gegen den Grundkörper gepreßt, um einen guten Wärmekontakt zu gewährleisten. Der Wärmekontakt kann z.B. auch durch Ansaugen mittels Unterdrucks verbessert werden.

Das Thermostatisiergerät gemäß der Erfindung läßt sich außerdem auch schnell auf unterschiedliche Typen von Probenhalterungen umrüsten.

Im folgenden wird ein bevorzugtes Ausführungsbeispiel des erfingungsgemäßen Thermostatisiergerätes unter Bezugnahme auf die Zeichnungen näher erläutert. Es zeigen:
- Fig. 1: eine vereinfachte Draufsicht auf ein Thermostatisiergerät gemäß einer Ausführungsform der Erfindung;
- Fig. 2: eine Stirnansicht des Thermostatisiergerätes gemäß Fig. 1 und
- Fig. 3: eine graphische Darstellung der Temperaturverteilung längs eines Grundkörpers des Thermostatisiergeräts gemäß Fig. 1 und 2.

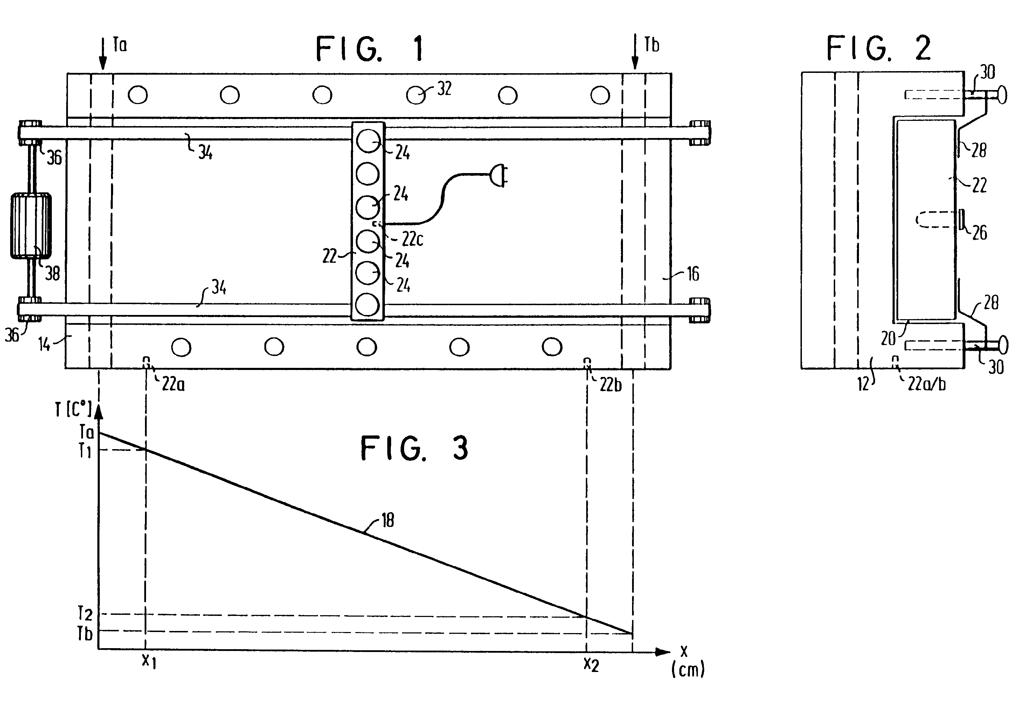

Das in Fig. 1 und 2 dargestellte Theromostatisiergerät weist einen gut wärmeleitenden Grundkörper 12 in Form einer im Querschnitt U-förmigen, massiven Schiene aus Aluminium auf, die zwei hochstehende Schenkel hat. Die Längsenden des langgestreckten Grundkörpers sind jeweils mit einem nur schematisch angedeuteten Thermostaten 14 bzw. 16 thermisch gekoppelt. Die Thermostaten 14, 16 sind auf verschiedene Temperaturen Tₐ bzw. T_{b} einstellbar, so daß sich längs des Grundkörpers 12 ein Temperaturgefälle (Temperaturgradient) einstellt, der vorzugsweise linear ist, wie durch eine Gerade 18 in Fig. 3 dargestellt ist. Der Grundkörper (12) bildet auf seiner Oberseite zwischen den Schenkeln eine kanalartige Vertiefung 20, in der ein aus gut wärmeleitendem Metall, wie Aluminium, bestehender Probenträger oder Probenaufnahmekörper 22 verschiebbar gelagert ist. Der Probenaufnahmekörper 22 hat Ausnehmungen 24, in die Proben- oder Reaktionsgefäße 26 einsetzbar sind, wie Fig. 2 schematisch zeigt. Am Grundkörper sind in der Nähe seiner Enden Wärmefühler 22a bzw. 22b angebracht. Ein weiterer Wärmefühler 22c kann am Probenaufnahmekörper 22 vorgesehen sein. Um einen guten Wärmekontakt zu gewährleisten, kann der Probenaufnahmekörper 22 durch Federn 28 gegen den Grundkörper 12 gepreßt werden. Die Federn 28 werden durch Stifte 30 gehaltert, die in Löcher 32 in den Schenkeln des Grundkörpers 12 eingesetzt werden.

Zum Verschieben des Probenaufnahmekörpers 22 längs des Grundkörpers 12 ist bei dem dargestellten Ausführungsbeispiel der Erfindung eine Transportvorrichtung vorgesehen, die zwei Zahnriemen 34 enthält, die über Umlenkrollen 36 laufen, von denen ein Paar mit einem Antriebsmotor 38 gekoppelt ist. Die Transportvorrichtung kann einen Lagegeber enthalten, z. B. ein mit einer Umlenkrolle 36 gekoppeltes Potentiometer, um ein elektrisches Signal zu erzeugen, das die Lage des Probenaufnahmekörpers 22 längs des Grundkörpers 12 angibt.

Das Gerät ist mit einer Wärmeisolation versehen, die aus Übersichtlichkeitsgründen in der Zeichnung nicht dargestellt ist. Insbesondere kann der Grundkörper 12 zur Vermeidung von Wärmeverlusten allseitig durch eine Schaumstoffschicht thermisch isoliert und mit einem thermisch isolierenden Deckel versehen sein. Der Probenaufnahmekörper 22 kann ebenfalls einen Deckel aufweisen.

Der Wärmestrom, der von dem Thermostaten 14, 16 im Grundkörper 12 erzeugt wird, und der Querschnitt des Grundkörpers werden auf der Basis der bekannten Gesetzte der Wärmeleitung so bemessen, daß die Wärmemenge, die dem Probenaufnahmekörper 22 bei einer Temperaturänderung zu- oder abgeführt werden muß, innerhalb einer für die vorgesehen Experimente geeigneten Zeitspanne vom Grundkörper 12 an den Probenaufnahmekörper 22 abgegeben bzw. von diesem aufgenommen werden kann. Die Steuerung der Lage des Probenaufnahmekörpers 22 längs des Grundkörpers 12 kann durch einen Rechner erfolgen, dem das Lagesignal vom Lagegeber zugeführt ist. Der Rechner kann die Temperaturverteilung längs des Grundkörpers 12 aus den Temperaturen Tₐ und T_{b} an den Enden des Grundkörpers errechnen, wenn der Temperaturgradient linear ist. Wenn der Temperaturverlauf längs des Grundkörpers 12 nicht linear ist, kann der Temperaturverlauf für verschiedene Werte von Tₐ und T_{b} ermittelt und im Rechner gespeichert werden. Um das Umtemperieren der Proben zu beschleunigen, kann man den ganzen Temperaturbereich ausnutzen, der zur Verfügung steht. Z. B. kann man, wenn die Proben von 30°C auf 70° gebracht werden sollen, den Probenaufnahmekörper zunächst auf die höchste Temperatur, die zur Verfügung steht fahren und den Körper dann in Richtung auf die 70°-Position zurückfahren, wenn der Temperaturfühler 24 meldet, daß sich die Temperatur des Probenaufnahmekörpers 22 dem gewünschten Wert von 70° nähert. Ein Vorteil dieser Art der Temperatureinstellung besteht darin, daß man den Temperaturverlauf längs des Trägers 12 nicht genau zu kennen braucht und mit einem einfachen Regler auskommt, dem der vom Wärmefühler 24 erzeugte Probenaufnahmekörper-Ist-Temperaturwert sowie ein Temperatur-Sollwert zugeführt sind und der die Transportvorrichtung entsprechend steuert.

Bei den Thermostaten 14 und 16 kann es sich um übliche Flüssigkeitsthermostaten handeln. Man kann jedoch auch andere Thermostaten verwenden, z. B. solche, die mit Heizpatronen, Peltier-Elementen und dergleichen arbeiten. Am Ende niedriger Temperatur können auch einfach Kühlrippen, ggf. in Verbindung mit einem geregelten Kühlgebläse, ein Eisbad u. dgl. vorgesehen sein.

Der Wärmekontakt zwischen dem Probeaufnahmekörper 22 und dem Grundkörper 12 kann durch Schmiermittel und/oder Ansaugen mittels Unterdrucks verbessert werden.

Der Grundkörper kann zwischen seinen Enden mit zusätzlichen Heiz- und/oder Kühlvorrichtungen versehen sein, denen jeweils ein eigener Temperaturfühler zugeordnet ist. Die zusätzlichen Heiz- und/oder Kühlvorrichtungen können zum Linearisieren des Temperaturgradienten dienen oder zur Erzeugung eines bestimmten Verlaufes des Temperaturgradienten, z. B .kann man längs des Grundkörpers 12 Abschnitte mit Temperaturgradienten unterschiedlicher Steigungen erzeugen, um in Temperaturbereichen, in denen die Temperatureinstellung kritisch ist, einen relativ flachen Temperaturgradienten zur Verfügung zu haben, der eine genaue Temperatureinstellung ermöglicht, und in anderen Bereichen wiederum steilere Temperaturgradienten, um einen möglichst großen Temperaturbereich zur Verfügung zu haben.

## Patentansprüche

1. Thermostatisiergerät zum Einstellen der Temperatur mindestens einer Probe (24) auf beliebige Werte innerhalb eines vorgegebenen Temperaturbereiches, mit einem gut wärmeleitenden langgestreckten Grundkörper (12), der mit seinem ersten Ende an eine auf eine erste Temperatur eingestellte erste Thermostateinrichtung (14) und mit seinem zweiten Ende an eine auf eine zweite Temperatur eingestellte zweite Thermostateinrichtung (16) thermisch angeschlossen und so bemessen ist, daß zwischen diesen Enden ein Temperaturgradient längs des Grundkörpers (12) entsteht, und mit einem wärmeleitenden Probenaufnahmekörper (22), der an einer beliebigen Stelle zwischen den thermostatisierten Enden mit dem Grundkörper (12) zur thermischen Kopplung in Anlage bringbar ist, dadurch gekennzeichnet, daß der Probenaufnahmekörper (22) an dem Grundkörper (12) in Längsrichtung verschiebbar gelagert ist, eine Transportvorrichtung (34, 36, 38) zum Verschieben des Probenaufnahmekörpers (22) vorgesehen ist, Mittel (28) zum Andrücken des Probenaufnahmekörpers (22) an den Grundkörper (12) vorgesehen sind und zum schnellen Umtemperieren der Probe der Wärmestrom in dem Grundkörper (12) sowie der Querschnitt des Grundkörpers (12) so bemessen sind, daß die Wärmemenge, die dem Probenaufnahmekörper (22) bei einer Temperaturänderung infolge Verschiebens des Probenaufnahmekörpers (22) zu- oder abgeführt werden muß, in einer für chemische und biochemische Experimente geeigneten Zeitspanne von dem Grundkörper (12) an den Probenaufnahmekörper (22) abgegeben bzw. von dieses aufgenommen werden kann.

2. Thermostatisiergerät nach Anspruch 1, dadurch gekennzeichnet, daß der aus Metall gefertige Grundkörper (12) einen im wesentlichen U-förmigen Querschnitt mit zwei seitlichen Schenkeln hat, zwischen denen der Probenaufnahmekörper (22) gelagert ist.

3. Thermostatisiergerät nach einem der vorhergehenden Ansprüche, dadurch gekennzeichnet, daß der Grundkörper (12) zwischen seinen Enden mit mindestens einer weiteren Thermostateinrichtung thermisch gekoppelt ist.

4. Thermostatisiergerät nach Anspruch 1, gekennzeichnet durch eine Regeleinrichtung, die mit einem am Probenaufnahmekörper (22) angebrachten Wärmefühler (22c) und einer Einrichtung zum Erzeugen eines Temperatur-Sollwertsignales gekoppelt ist und die Transportvorrichtung (34, 36, 38) steuert.

## Claims

1. Thermostatting device for adjusting the temperature of at least one sample (24) to any value within a predetermined temperature range, comprising an elongated main body (12) offering good heat-conducting properties which has its first and thermally connected to a first thermostat means (14) set to a first temperature, and has its second end thermally connected to a second thermostat means (16) set to a second temperature, and which is sized in such a way that a temperature gradient develops along said main body, between these two ends, and comprising further a heat-conductive sample holder body (22) that can be brought into contact with the main body (12), for thermal coupling, at any point between its thermostatted ends, characterized in that the sample holder body (22) is supported on the main body (12) for displacement in the longitudinal direction, a transport means (34,36,38) is provided for displacing the sample holder body (22), means (28) are provided for pressing the sample holder body (22) against the main body (12), and that the heat flow in the main body (12) as well as the cross-section of the main body (12) are selected in such a way, with a view to achieving rapid temperature changes in the samples, that the amount of heat that has to be supplied to or carried off as a result of the temperature variation caused by any displacement of the sample holder body (22) is transferred from the main body (12) to the sample holder body (22) and absorbed by the latter or vice-versa, respectively, within a period of time suited for chemical and biochemical experiments.

2. Thermostatting device according to claim 1, characterized in that the main body (12), which is made from metal, exhibits substantially the cross-sectional shape of a U having two lateral legs enclosing between them the sample holder body (22).

3. Thermostatting device according to any of the preceding claims, characterized in that the main body (12) is thermally coupled, between its ends, with at least one additional thermostat means.

4. Thermostatting device according to claim 1, characterized in that a regulating device is provided which is coupled with a temperature sensor (22), arranged on the sample holder body (22), and with means for generating a temperature setpoint signal, for controlling the transport means (34,36,38).

## Revendications

1. Dispositif thermostatique pour régler la température d'au moins un échantillon (24) sur des valeurs quelconques à l'intérieur d'une plage de températures donnée, comportant une embase (12) allongée, bonne conductrice de chaleur, qui est thermiquement raccordée par sa première extrémité à un premier dispositif à thermostat (14) réglé sur une première température et, par sa seconde extrémité, à un second dispositif à thermostat (16), réglé sur une seconde température et qui a des dimensions telles qu'entre ces extrémités il s'établit un gradient de température le long de l'embase (12), et comportant un corps de réception d'échantillons (22) conducteur de chaleur qui, en un point quelconque entre les extrémités rendues thermostatiques, peut être amené en application contre l'embase (12), en vue du couplage thermique, caractérisé en ce que le corps de réception d'échantillons (22) est monté déplaçable sur l'embase (12), dans la direction longitudinale, en ce qu'il est prévu un dispositif de transport (34, 36, 38) pour le déplacement du corps de réception d'échantillon (22), en ce qu'il est prévu des moyens (28) pour presser le corps de réception d'échantillons (22) contre l'embase (12) et, afin de modifier rapidement la température de l'échantillon, le flux thermique dans l'embase (12) ainsi que la section transversale de l'embase (12) ont des dimensions telles que la quantité de chaleur qui doit être envoyée au corps de réception d'échantillons (22) ou évacuée de celui-ci, lors d'un changement de température par suite du déplacement du corps de réception d'échantillons (22), peut être cédée par l'embase (12) au corps de réception d'échantillons (22) ou absorbée par celle-ci, dans un laps de temps convenant à des expérimentations chimiques et biochimiques.

2. Dispositif thermostatique selon la revendication 1, caractérisé en ce que l'embase (12), réalisée en métal, présente une section transversale sensiblement en U avec deux branches latérales entre lesquelles est monté le corps de réception d'échantillons (22).

3. Dispositif thermostatique selon l'une des revendications précédentes, caractérisé en ce que l'embase (12) est thermiquement couplée entre ses extrémités, avec au moins un autre dispositif à thermostat.

4. Dispositif thermostatique selon la revendication 1, caractérisé par un dispositif de régulation,qui est couplé avec une sonde thermique (22c), montée sur le corps de réception d'échantillons (22) et avec un dispositif destiné à produire un signal de température de consigne et qui commande le dispositif de transport (34, 36, 38).
